# EUROPÄISCHE PATENTSCHRIFT

(11) **EP 4 050 306 B1**
(45) Veröffentlichungstag und Bekanntmachung des Hinweises auf die Patenterteilung: **02.10.2024**
(21) Anmeldenummer: 22154403.4
(22) Anmeldetag: 01.02.2022
(51) Int. Cl.: G01C 15/00, F16M 11/12, F16M 11/18, F16M 13/02

(54) **VERFAHREN ZUM AUSRICHTEN EINER ROTATIONSEBENE EINES ROTATIONSLASERS UND HALTE- UND JUSTIERVORRICHTUNG ZUM AUSRICHTEN DES ROTATIONSLASERS**
METHOD FOR ALIGNING A PLANE OF ROTATION OF A ROTATING LASER AND HOLDING AND ADJUSTING DEVICE FOR ALIGNING THE ROTATING LASER
PROCÉDÉ D'ALIGNEMENT D'UN PLAN DE ROTATION D'UN LASER ROTATIF ET DISPOSITIF DE MAINTIEN ET D'AJUSTEMENT PERMETTANT D'ALIGNER LE LASER ROTATIF

(30) Priorität: 26.02.2021 DE 102021104664
(43) Veröffentlichungstag der Anmeldung: 31.08.2022
(73) Patentinhaber: fischerwerke GmbH & Co. KG, 72178 Waldachtal (DE)
(72) Erfinder: Krumbeck, Markus, 72108 Rottenburg a.N. (DE); Krumbeck, Bernhard, 48356 Nordwalde (DE)
(74) Vertreter: Suchy, Ulrich Johannes

(56) Entgegenhaltungen:
- EP-A1- 3 660 451
- KR-U- 20090 010 563

## Beschreibung

Die Erfindung betrifft ein Verfahren zu einem parallelen Ausrichten einer Rotationsebene eines Laserstrahls insbesondere eines Rotationslasers mit den Merkmalen des Anspruchs 1 und eine Halte- und Justiervorrichtung zum Befestigen und parallelen Ausrichten der Rotationsebene des Laserstrahls des Rotationslasers mit den Merkmalen des Anspruchs 2.

Rotationslaser werden auch als Nivellierlaser, Baulaser oder Baustellenlaser bezeichnet. Sie weisen einen in einer Rotationsebene rotierenden Laserstrahl auf und dienen einer rationellen Messung von Abständen von der Rotationsebene an beliebigen Stellen der Rotationsebene. Anstelle eines Rotationslasers ist auch ein Laser, dessen Laserstrahl in einer Laser(strahl)ebene in beliebige oder jedenfalls in verschiedene Richtungen gelenkt werden kann, möglich.

Die Offenbarung KR 2009 0010563 U zeigt ein System zur Niveauregulierung eines Rotationslasers. Der Rotationslaser befindet sich bei diesem System mittig auf einer Platte, die an drei Auflagerpunkten aufliegt und über ein Federelement auf diesen gehalten wird. Zur Niveauregulierung sind zwei der Auflagepunkte als Schraubelemente gestaltet, wodurch die Höhe der Auflagepunkte verstellt werden kann. Somit ergeben sich zwei Schwenkachsen, um welche die Platte geschwenkt werden kann. Für die Niveauregulierung wird zuerst die Lage der Platte bezüglich der ersten Schwenkachse durch das erste Schraubelement justiert und anschließend mittels des zweiten Schraubelements die Lage bezüglich der zweiten Schwenkachse eingestellt. Durch den mittigen Sitz des Rotationslasers wird bei einer Verstellung um eine Schwenkachse neben der Änderung der Neigung des Rotationslasers auch eine Höhenverstellung dieses bewirkt.

Die Patentschrift EP 3 660 451 A1 beschreibt ein Modul zur Verortung eines Vermessungsgeräts, welches auf einem Stativ über einer Bodenmarke angebracht ist.

Das Modul kann als Tribrach ausgebildet sein, welcher die Befestigungseinrichtung für den Rotationslaser darstellt. Dabei wird ein Verfahren zum Justieren eines Rotationslasers parallel zu einer Bezugsebene offenbart. Über drei Stellschrauben kann die Befestigungseinrichtung des Rotationslasers in ihrer Lage eingestellt werden. Wenn eine Stellschraube betätigt wird, definieren die beiden anderen Stellschrauben die Achse, um welche die Befestigungseinrichtung verschwenkt wird.

Die internationale Patentanmeldung WO 2019/234 058 A1 offenbart eine Halte- und Justiervorrichtung zu einer Befestigung eines Rotationslasers von unten an einem Dachsparren, das heißt von unten an einer Dachschräge. Die bekannte Halte- und Justiervorrichtung weist eine Befestigungsschiene auf, die an dem Dachsparren festlegbar ist, und eine Tragschiene, die rechtwinklig von der Befestigungsschiene absteht und die in Längsrichtung der Befestigungsschiene verschiebbar ist. An einem der Befestigungsschiene fernen Ende der Tragschiene ist eine Befestigungseinrichtung zur Befestigung des Rotationslasers angeordnet, die zwei zueinander parallele, in einem Abstand voneinander und rechtwinklig zur Tragschiene angeordnete, rechteckige Platten aufweist. Eine der beiden Platten ist an der Tragschiene befestigt, die andere Platte ist zur Befestigung des Rotationslasers vorgesehen. Die beiden Platten sind durch vier Schrauben miteinander verbunden, die an Ecken eines gedachten Rechtecks innerhalb der beiden Platten angeordnet sind. Auf den Schrauben sind zwischen den beiden Platten Schraubendruckfedern angeordnet, die die beiden Platten auseinander drücken. Durch Drehen der Schrauben lässt sich der Abstand der beiden Platten an den Punkten, an denen sich die Schrauben mit den Schraubendruckfedern befinden, verstellen und auf diese Weise die beiden Platten zweidimensional in beliebigen Richtungen gegeneinander verschwenken. Ein Ausrichten der Rotationsebene des Rotationslasers parallel zu einer Bezugsebene mit der bekannten Halte- und Justiervorrichtung erfordert einigen Aufwand und muss iterativ erfolgen, weil durch Verstellen einer der vier Schrauben die Platte mit dem Rotationslaser um eine nicht definierte Achse schwenkt. Das Ausrichten des Rotationslasers in einer zweiten Dimension verstellt eine zuvor erfolgte Ausrichtung des Rotationslasers in einer ersten Dimension, so dass die beiden Dimensionen abwechselnd und wiederholt nachjustiert werden müssen.

Aufgabe der Erfindung ist, ein vereinfachtes Verfahren und eine Halte- und Justiervorrichtung zu einem Ausrichten einer Rotationsebene eines Laserstrahls eines Rotationslasers parallel zu einer Bezugsebene vorzuschlagen. Dabei ist die Erfindung insbesondere zu einer Befestigung des Rotationslasers über Kopf, das heißt von unten an einer schiefen, das heißt nicht-horizontalen Bezugsebene vorgesehen, also beispielsweise von unten an einer Dachschräge.

Diese Aufgabe wird erfindungsgemäß durch die Merkmale der Ansprüche 1 und 2 gelöst.

Die abhängigen Ansprüche haben vorteilhafte Ausgestaltungen und Weiterbildungen der Erfindung zum Gegenstand.

Die erfindungsgemäße Halte- und Justiervorrichtung weist eine erste Befestigungseinrichtung zum Befestigen der Halte- und Justiervorrichtung an einem Befestigungsgrund und eine zweite Befestigungseinrichtung zur Befestigung eines Rotationslasers an der Halte- und Justiervorrichtung auf. Wie oben beschrieben werden Rotationslaser auch als Nivellierlaser, Baulaser oder Baustellenlaser bezeichnet und weisen einen in einer Rotationsebene rotierenden Laserstrahl auf. Anstelle eines Rotationslasers kann auch ein Laser, dessen Laserstrahl in einer Laser(strahl)ebene in beliebige oder jedenfalls verschiedene Richtungen gelenkt werden kann, an der zweiten Befestigungseinrichtung der erfindungsgemäßen Halte- und Justiervorrichtung befestigt werden. Vorstellbar ist der Einsatz von Prismen zur Aufspannung einer Laser(strahl)ebene.

Der Befestigungsgrund ist wie beschrieben beispielsweise eine Unterseite einer Dachschräge, beispielsweise ein oder zwei Dachsparren. Dabei bilden Unterseiten der Dachsparren die nicht-horizontale, schiefe Bezugsebene, zu der die Rotationsebene des Laserstrahls des Rotationslasers parallel ausgerichtet werden muss oder soll. Sofern die Unterseiten der Dachsparren nicht parallel oder nicht in einer Ebene sind, wird eine in geeigneter Weise gemittelte Bezugsebene gebildet. Die Erfindung ist nicht auf eine schiefe Bezugsebene beschränkt, sondern es ist auch eine horizontale Befestigung der ersten Befestigungseinrichtung der Halte- und Justiervorrichtung auf beispielsweise einem Stativ, beispielsweise einem Dreibein, möglich.

Die beiden Befestigungseinrichtungen der erfindungsgemäßen Halte- und Justiervorrichtung sind um zwei zu der Rotationsebene des Laserstrahls des Rotationslasers parallele und einander schneidende Schwenkachsen gegeneinander schwenkbar, wenn der Rotationslaser in vorgesehener Weise an der zweiten Befestigungseinrichtung befestigt ist, so dass die zweite Befestigungseinrichtung mit dem Rotationslaser zum Ausrichten des Rotationslasers zweidimensional ausgerichtet werden kann, bis die Rotationsebene parallel zur Bezugsebene ist. Die beiden Schwenkachsen verlaufen senkrecht zueinander und schneiden sich in einer Rotationsachse des Laserstrahls des Rotationslasers, wenn der Rotationslaser wie vorgesehen an der zweiten Befestigungseinrichtung der erfindungsgemäßen Halte- und Justiervorrichtung befestigt ist. Der Laserstrahl ist radial zu der Rotationsachse ausgerichtet und rotiert im Betrieb um die Rotationsachse, wodurch die Rotationsebene aufgespannt wird.

Zur Befestigung der Halte- und Justiervorrichtung wird deren erste Befestigungseinrichtung an dem Befestigungsgrund und vorzugsweise der Rotationslaser an der zweiten Befestigungseinrichtung der Halte- und Justiervorrichtung befestigt, wobei der Rotationslaser auch an der Halte- und Justiervorrichtung befestigt werden kann, bevor die Halte- und Justiervorrichtung - in diesem Fall zusammen mit dem Rotationslaser-an dem Befestigungsgrund befestigt wird.

Zur Ausrichtung der Rotationsebene des Laserstrahls des Rotationslasers parallel zu der Bezugsebene wird erfindungsgemäß die zweite Befestigungseinrichtung, an der der Rotationslaser befestigt ist, ausschließlich um eine erste der beiden Schwenkachsen geschwenkt, bis eine zweite der beiden Schwenkachsen parallel zur Bezugsebene verläuft. Davor oder danach wird die zweite Befestigungseinrichtung ausschließlich um die zweite Schwenkachse geschwenkt, bis die erste Schwenkachse parallel zur Bezugsebene verläuft. Weil die beiden Schwenkachsen in einem Winkel, insbesondere in einem Winkel von 90° zueinander und parallel zur Rotationsebene des Laserstrahls des Rotationslasers verlaufen, ist die Rotationsebene parallel zur Bezugsebene ausgerichtet, wenn die beiden Schwenkachsen parallel zur Bezugsebene verlaufen. Eine Verstellung einer der beiden Schwenkachsen ändert nicht die Ausrichtung der anderen Schwenkachse, so dass die erste Schwenkachse parallel zur Bezugsebene ausgerichtet bleibt, wenn sie parallel zur Bezugsebene ausgerichtet worden ist, und die zweite Befestigungseinrichtung der erfindungsgemäßen Halte- und Justiervorrichtung zur Ausrichtung der zweiten Schwenkachse parallel zu Bezugsebene um die erste Schwenkachse geschwenkt wird und umgekehrt. Erfindungsgemäß wird also die zweite Befestigungseinrichtung der Halte- und Justiervorrichtung mit dem Rotationslaser nacheinander jeweils einmal um die beiden Schwenkachsen geschwenkt und ist dann parallel zur Bezugsebene ausgerichtet. Möglich ist die Ausrichtung der zweiten Befestigungseinrichtung auch ohne Befestigung des Rotationslasers an ihr, wobei es in den meisten Fällen zweckmäßig sein dürfte, wenn der Rotationslaser befestigt ist, so dass die vom Laserstrahl erzeugte Rotationsebene zur Ausrichtung parallel zur Bezugsebene verwendet werden kann.

Wie weiter oben beschrieben schneiden die beiden Schwenkachsen der erfindungsgemäßen Halte- und Justiervorrichtung einander rechtwinklig und/oder insbesondere in der Rotationsachse des Laserstrahls des Rotationslasers, wenn der Rotationslaser wie vorgesehen an der zweiten Befestigungseinrichtung der Halte- und Justiervorrichtung befestigt ist. Dadurch befindet sich ein Schwenkpunkt, um den die Rotationsebene des Laserstrahls des Rotationslasers zweidimensional schwenkbar ist, in der Rotationsachse des Laserstrahls, die zweite Befestigungseinrichtung mit dem Rotationslaser schwenkt um den Schnittpunkt der Rotationsachse des Laserstrahls mit den beiden Schwenkachsen der Halte- und Justiervorrichtung.

Eine Ausgestaltung der Erfindung sieht eine elastische Verbindung der beiden Befestigungseinrichtungen der Halte- und Justiervorrichtung mit sogenannten "Silentblocs" oder "Silentblöcken" vor, also mit Gummi- oder Elastomerelementen, an oder in die Innen- und/oder Außengewindeelemente an- oder einvulkanisiert sind. Möglich sind beispielsweise auch ringförmige beziehungsweise ein Durchgangsloch aufweisende Gummi- oder Elastomerelemente, durch die eine Schraube oder ein Gewindebolzen zum Verbinden der beiden Befestigungseinrichtungen durchgeführt wird. Umgangssprachlich werden Silentblocs oder Silentblöcke auch als Gummipuffer bezeichnet, wobei die Bezeichnung Elastomerpuffer treffender ist. Im Folgenden wird von "Elastomerpuffern" die Rede sein, ohne Silentblocs oder Silentblöcke oder dergleichen auszuschließen. Es werden insbesondere drei Elastomerpuffer an den Ecken eines gedachten, vorzugsweise rechtwinkligen Dreiecks angeordnet, die die beiden Befestigungseinrichtungen elastisch verbinden. Die drei Elastomerpuffer definieren drei Schwenkachsen, von denen zwei zum Verschwenken und Ausrichten der zweiten Befestigungseinrichtung mit dem Rotationslaser verwendet werden. Durch Zu- oder Auseinander-Bewegen der beiden Befestigungseinrichtungen an einem der drei Elastomerpuffer wird die zweite Befestigungseinrichtung um eine Schwenkachse zur ersten Befestigungseinrichtung geschwenkt, die durch die beiden anderen Elastomerpuffer definiert ist. Die beiden Befestigungseinrichtungen müssen jedoch nicht zwangsläufig elastisch miteinander verbunden sein, wobei diese Art der Verbindung jedoch bevorzugt ist. Wichtig ist lediglich, dass es die Verbindung erlaubt, dass die beiden Befestigungseinrichtungen gegeneinander schwenkbar sind.

Der Rotationslaser ist beziehungsweise wird insbesondere so an der zweiten Befestigungseinrichtung befestigt, dass die Rotationsachse des Laserstrahls koaxial zu einem der drei Elastomerpuffer ist. Geschwenkt wird durch Verstellen der beiden anderen Elastomerpuffer. Die Rotationsachse des Laserstrahls ist insbesondere zu dem Elastomerpuffer koaxial, der sich an der rechtwinkligen Ecke des gedachten Dreiecks befindet, wenn das Dreieck ein rechtwinkliges ist.

Eine Ausgestaltung der Erfindung sieht einen ersten Abstandseinsteller in einem radialen Abstand von der ersten Schwenkachse und einen zweiten Abstandseinsteller in einem radialen Abstand von der zweiten Schwenkachse vor, mit denen ein Abstand zwischen den beiden Befestigungseinrichtungen der Halte- und Justiervorrichtung an den Stellen, an denen sich die Abstandseinsteller befinden, ein- und/oder verstellbar ist. Dadurch lassen sich die beiden Befestigungseinrichtungen um die beiden Schwenkachsen schwenken und auf diese Weise die Rotationsebene des Laserstrahls des Rotationslasers parallel zur Bezugsebene ausrichten.

Eine Ausgestaltung der Erfindung sieht vor, dass eine oder beide Befestigungseinrichtungen eine ebene Platte, insbesondere eine ebene L-förmige Platte aufweisen. Sofern mindestens eine Platte einen oder zwei gerade Ränder aufweist, verläuft eine oder verlaufen beide Schwenkachsen parallel zu dem/n geraden Rand/Rändern der Platte/n. Im Falle mindestens einer L-förmigen Platte befinden sich die beiden Schwenkachsen vorzugsweise innerhalb von Schenkeln der Platte. Durch diese spezielle Ausgestaltung der einen oder beider Befestigungseinrichtungen als L-förmige Platten sowie durch die Lage der beiden Schwenkachsen bezüglich der L-förmigen Platten ist eine besonders einfache Ausrichtung der Rotationsebene des Lasers zur Bezugsebene möglich. Wird beispielsweise die Bezugsebene mit Hilfe eines einzelnen Dachsparrens oder eines Kniestocks definiert, ist es möglich, beispielsweise die Kante der ersten Befestigungseinrichtung parallel zur Kante des Dachsparrens oder des Kniestocks zu montieren. Dadurch ist folglich zumindest eine der Schwenkachsen bereits parallel zu dem Dachsparren, beziehungsweise dem Kniestock, ausgerichtet.

Die zweite Befestigungseinrichtung der Halte- und Justiervorrichtung ist gemäß einer Ausführung der Erfindung derart ausgebildet, dass die Rotationsachse des Laserstrahls des Rotationslasers den Schnittpunkt der beiden Schwenkachsen, um die die beiden Befestigungseinrichtungen gegeneinander schwenkbar sind, schneidet, wenn der Rotationslaser wie vorgesehen an der zweiten Befestigungseinrichtung befestigt ist. Dadurch wird erreicht, dass zum Ausrichten der Rotationsebene des Laserstrahls des Rotationslasers parallel zur Bezugsebene die Rotationsachse des Laserstrahls des Rotationslasers zweidimensional um den Schnittpunkt der beiden Schwenkachsen als Schwenkpunkt schwenkbar ist.

Eine bevorzugte Ausgestaltung der Erfindung sieht vor, dass die zweite Befestigungseinrichtung einen Gewindezapfen zur Befestigung des Rotationslasers aufweist, dessen Achse den Schnittpunkt der beiden Schwenkachsen der Halte- und Justiervorrichtung schneidet. Zu ihrer Befestigung weisen viele Rotationslaser ein Innengewinde im Zentrum, vorzugsweise in einer Mitte eines Standfußes, einer Standebene oder dergleichen des Rotationslasers auf, die koaxial zur Rotationsachse des Laserstrahls des Rotationslasers angeordnet ist. Durch die Befestigung eines solchen Rotationslasers durch Festschrauben an dem Gewindezapfen der zweiten Befestigungseinrichtung schneidet die Rotationsachse des Laserstrahls des Rotationslasers den Schnittpunkt der beiden Schwenkachsen, um die die beiden Befestigungseinrichtungen der Halte- und Justiervorrichtung gegeneinander schwenkbar sind.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: einen Dachstuhl mit einem von unten an einer Dachschräge mittels einer erfindungsgemäßen Halte- und Justiervorrichtung befestigten Rotationslaser;
- Figur 2: eine Ansicht der erfindungsgemäßen Halte- und Justiervorrichtung aus Figur 1 von oben;
- Figur 3: eine perspektivische Darstellung der Halte- und Justiervorrichtung aus Figur 2; und
- Figur 4: die Halte- und Justiervorrichtung aus Figur 3 mit dem auf ihr befestigten Rotationslaser.

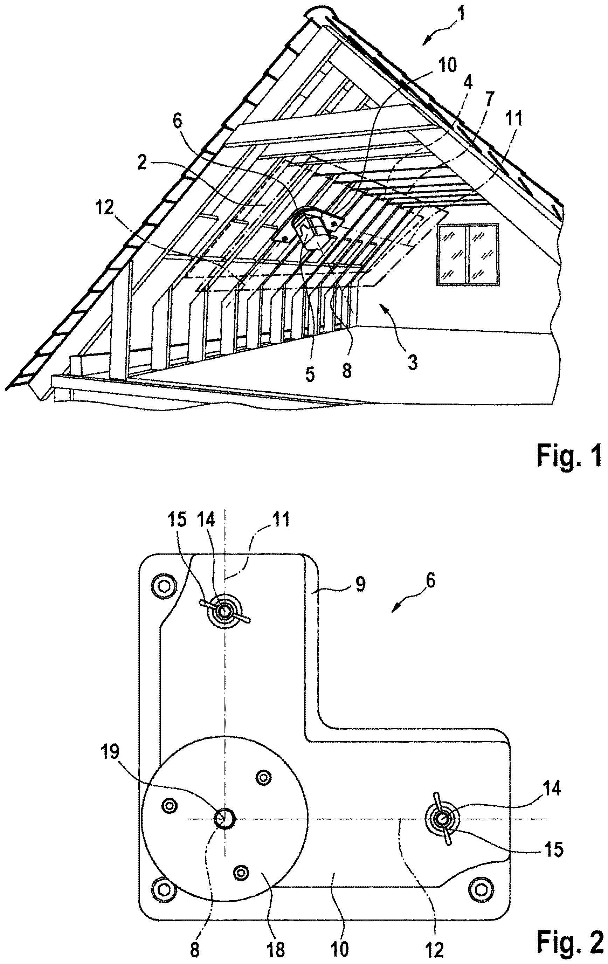

Figur 1 zeigt einen Blick in einen Dachstuhl 1 mit schrägen Dachsparren 2, die eine Dachschräge 3 bilden oder Teil der Dachschräge 3 sind und deren Unterseiten eine schiefe, das heißt nicht-horizontale Bezugsebene 4 bilden. Sofern die Unterseiten der Dachsparren 2 sich nicht in einer Ebene befinden, wird eine gemittelte Ebene der Unterseiten der Dachsparren 2 als Bezugsebene 4 gewählt. Die Bezugsebene 4 ist in Figur 1 als mit Strichlinien gezeichnetes Rechteck veranschaulicht.

Von unten an der Unterseite der Dachschräge 3 ist ein Rotationslaser 5 mittels einer erfindungsgemäßen Halte- und Justiervorrichtung 6 befestigt. Der Rotationslaser 5 erzeugt einen in einer Rotationsebene 7 um eine Rotationsachse 8 rotierenden, zu der Rotationsachse 8 radialen Laserstrahl. Es lassen sich auch andere Laser auf der erfindungsgemäßen Halte- und Justiervorrichtung 6 befestigen (nicht dargestellt).

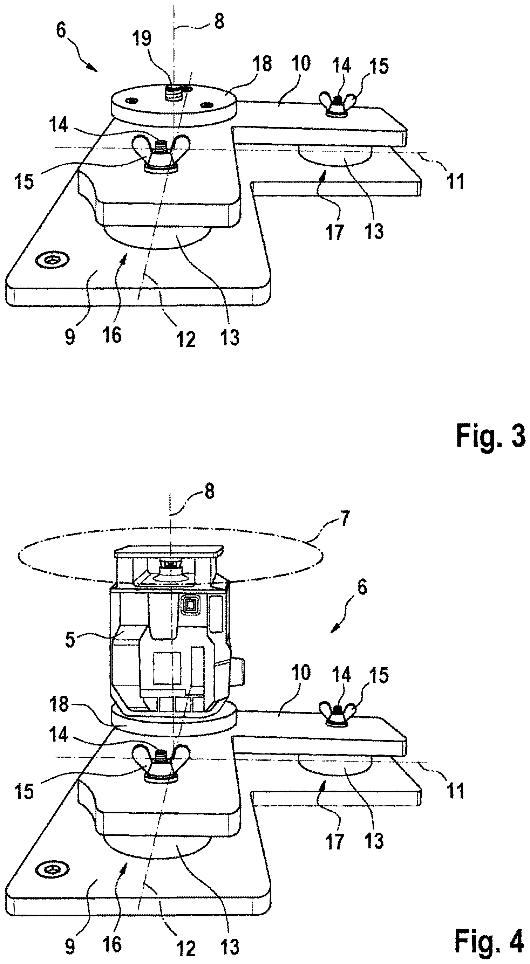

Die erfindungsgemäße Halte- und Justiervorrichtung 6 ist in Figuren 2 und 3 ohne und in Figur 4 mit dem Rotationslaser 5 gezeichnet. Sie weist zwei in Ansicht L-förmige, ebene Platten mit - im Ausführungsbeispiel - zueinander rechtwinkligen Schenkeln auf, die zwei Befestigungseinrichtungen 9, 10 der Halte- und Justiervorrichtung 6 bilden. Eine erste der beiden Befestigungseinrichtungen 9 dient zu einer Befestigung der Halte- und Justiervorrichtung 6 an einem Befestigungsgrund, den im Ausführungsbeispiel die Dachsparren 2 bilden. Eine zweite der beiden Befestigungseinrichtungen 10 dient zur Befestigung des Rotationslasers 5 an oder auf der Halte- und Justiervorrichtung 6. Bei der in Figur 1 gezeigten Befestigung an der Unterseite der Dachschräge 3 ist der Rotationslaser 5 von unten an der Halte- und Justiervorrichtung 6 befestigt.

Die die beiden Befestigungseinrichtungen 9, 10 bildenden L-förmigen Platten weisen einen Abstand voneinander auf und befinden sind in einer Neutralstellung parallel zueinander, sie lassen sich um kleine Winkel um zwei einander - im Ausführungsbeispiel rechtwinklig - schneidende Schwenkachsen 11, 12 gegeneinander verschwenken. In Ansicht überdecken die beiden die Befestigungseinrichtungen 9, 10 bildenden L-förmigen Platten einander und weisen zueinander parallele Ränder auf. Die L-Form ist nicht zwingend für die Befestigungseinrichtungen 9, 10, und es sind auch andere Ausführungen der beiden Befestigungseinrichtungen 9, 10 als Platten möglich (nicht dargestellt).

Zur Befestigung der Halte- und Justiervorrichtung 6 an dem Befestigungsgrund, im Ausführungsbeispiel also an der Unterseite der Dachsparren 2, weist die erste Befestigungseinrichtung 9 - im Ausführungsbeispiel drei - Durchgangslöcher zu einer Befestigung mittels Schrauben oder dergleichen auf, die nicht auf einer gedachten Geraden, sondern an den Ecken eines gedachten Dreiecks angebracht sind.

Zwischen den beiden Befestigungseinrichtungen 9, 10 sind - im Ausführungsbeispiel drei - Elastomerpuffer 13 angeordnet, die die beiden Befestigungseinrichtungen 9, 10 in ihrem Abstand voneinander halten. Die Elastomerpuffer 13 können allgemein auch als elastische Elemente aufgefasst werden. Im Ausführungsbeispiel sind die Elastomerpuffer 13 Kreisscheiben aus einem Elastomer oder Gummi mit einem Durchgangsloch ihrer Mitte. Möglich ist beispielsweise auch die Verwendung so genannter Silentblocs oder Silentblöcke, also von Gummi- oder Elastomerelementen mit an oder in ihren Stirnseiten an- oder einvulkanisierten Gewindebolzen und/oder Gewindehülsen. Die Aufzählung ist beispielhaft und nicht abschließend.

Durch die Durchgangslöcher der Elastomerpuffer 13 und durch fluchtende Durchgangslöcher in den beiden Befestigungseinrichtungen 9, 10 sind Spannschrauben 14 durchgeführt, die die beiden Befestigungseinrichtungen 9, 10 zusammenhalten. Die Durchgangslöcher beziehungsweise die Spannschrauben 14 befinden sich in Längsmittelebenen der Schenkel der beiden die Befestigungseinrichtungen 9, 10 bildenden L-förmigen Platten, wobei eine der drei Spannschrauben 14 koaxial zu einer Kreuzungsgeraden der beiden Längsmittelebenen der Schenkel der Befestigungseinrichtungen 9, 10 und die beiden anderen Spannschrauben 14 jeweils in einem Abstand davon angeordnet sind. Die Elastomerpuffer 13 und die Spannschrauben 14 sind also an den Ecken eines gedachten - im Ausführungsbeispiel rechtwinkligen - Dreiecks angeordnet.

Auf die in Abstand von der Kreuzungsgeraden angeordneten Spannschrauben 14 sind - im Ausführungsbeispiel - Flügelmuttern 16 geschraubt, so dass die beiden Befestigungseinrichtungen 9, 10 zusammenspannbar sind. Die Spannschraube 14 an der Kreuzungsgeraden, die in der Zeichnung nicht sichtbar ist, ist fest in ein Innengewinde einer der beiden Befestigungseinrichtungen 9, 10 geschraubt und gegen Verdrehen gesichert. Diese Spannschraube 14 weist eine Vorspannung auf, das heißt, der Elastomerpuffer 13 an der Kreuzungsgeraden der beiden Längsmittelebenen der Schenkel der Befestigungseinrichtungen 9, 10 ist elastisch zusammengedrückt. Dadurch ist es nicht nur möglich, die Schenkel der die beiden Befestigungseinrichtungen 9, 10 bildenden L-förmigen Platten näher zusammenzuspannen, sondern durch Lockern der Flügelmuttern 15 auch weiter voneinander zu entfernen. Dadurch ist es möglich, die beiden Befestigungseinrichtungen 9, 10 um - im Ausführungsbeispiel - kleine, allerdings zum Ausrichten der Rotationsebene 7 des Laserstrahls des Rotationslasers 5 ausreichende Winkel zweidimensional in alle Richtungen gegeneinander zu verschwenken.

Die drei Elastomerpuffer 13 mit den Spannschrauben 14 und den Flügelmuttern 15 definieren die beiden Schwenkachsen 11, 12, die jeweils durch zwei der drei Spannschrauben 14 hindurch gehen, parallel zu den Rändern der Schenkel der die beiden Befestigungseinrichtungen 9, 10 bildenden L-förmigen Platten verlaufen, und sich in der Kreuzungsgeraden der Längsmittelebenen der Schenkel der beiden Befestigungseinrichtungen 9, 10 - im Ausführungsbeispiel rechtwinklig - schneiden. Durch Spannen oder Lockern einer der beiden Flügelmuttern 15 schwenken die beiden Befestigungseinrichtungen 9, 10 ausschließlich um die Schwenkachse 11, 12, die durch die andere Spannschraube 14 hindurch geht. Die Elastomerpuffer 13 mit den Spannschrauben 14 und den Flügelmuttern 15 können auch als Abstandseinsteller 16, 17 aufgefasst werden, mit denen die Abstände der Schenkel der beiden Befestigungseinrichtungen 9, 10 ver- und eingestellt werden können.

In einem Scheitelbereich, in dem die Schenkel der L-förmigen Befestigungseinrichtungen 9, 10 ineinander übergehen, ist auf einer der ersten Befestigungseinrichtung 9 abgewandten Außenseite der zweiten Befestigungseinrichtung 10 eine Adapterplatte 18 zur Befestigung des Rotationslasers 5 angebracht. Im Ausführungsbeispiel ist die Adapterplatte 18 eine Kreisscheibe, was allerdings nicht zwingend für die Erfindung ist. In ihrer Mitte weist die Adapterplatte 18 einen Gewindezapfen 19 zur Befestigung des Rotationslasers 5 auf, der in einer Standfläche an seiner Unterseite ein in der Zeichnung nicht sichtbares Innengewindeloch zu seiner Befestigung aufweist. Eine Achse des Gewindezapfens 19 ist identisch mit der Kreuzungsgeraden der beiden Längsmittelebenen der Schenkel der beiden Befestigungseinrichtungen 9, 10, das heißt, die Achse des Gewindezapfens 19 schneidet die beiden Schwenkachsen 11, 12 an ihrem Schnittpunkt. Das Innengewindeloch des Rotationslasers 5 ist konzentrisch zur Rotationsachse 8 des Laserstrahls. Die zweite Befestigungseinrichtung 10 der erfindungsgemäßen Halte- und Justiervorrichtung 6 ist also so ausgebildet, dass der Rotationslaser 5 so an ihr befestigbar ist, dass die Rotationsachse 8 des Laserstrahls den Schnittpunkt der beiden Schwenkachsen 11, 12, um den die beiden Befestigungseinrichtungen 9, 10 gegeneinander schwenkbar sind, schneidet. Durch Schwenken um die beiden Schwenkachsen 11, 12 schwenkt also die Rotationsachse 8 des Laserstrahls des Rotationslasers 5 zweidimensional um den Schnittpunkt der beiden Schwenkachsen 11, 12 beziehungsweise eindimensional um jeweils eine der beiden Schwenkachsen 11, 12.

Zu seiner Befestigung und Verwendung wird der Rotationslaser 5 an dem Gewindezapfen 19 der zweiten Befestigungseinrichtung 10 der erfindungsgemäßen Halte- und Justiervorrichtung 6 befestigt. Allgemein ausgedrückt, wird der Rotationslaser 5 so an der zweiten Befestigungseinrichtung 10 der Halte- und Justiervorrichtung 6 befestigt, dass die Rotationsachse 8 des Laserstrahls des Rotationslasers 5 den Schnittpunkt der beiden Schwenkachsen 11, 12 der Halte- und Justiervorrichtung 6 schneidet, und zwar senkrecht zu einer von den beiden Schwenkachsen 11, 12 aufgespannten Ebene.

Mit der Halte- und Justiervorrichtung 6 wird der Rotationslaser 5 an einem Befestigungsgrund befestigt. Im Ausführungsbeispiel bilden die Dachsparren 2 an der Dachschräge 3 des Dachstuhls 1 den Befestigungsgrund und der Rotationslaser 5 wird mittels der Halte- und Justiervorrichtung 6 "über Kopf", das heißt von unten an den Dachsparren 2, befestigt. Zur Befestigung wird im Ausführungsbeispiel die die erste Befestigungseinrichtung 9 bildende L-förmige Platte - im Ausführungsbeispiel - mit Holzschrauben an Unterseiten zweier benachbarter Dachsparren 2 befestigt. Vorzugsweise wird die Halte- und Justiervorrichtung 6 zum Befestigen an den Dachsparren 2 so ausgerichtet, dass die Ränder der beiden Befestigungseinrichtungen 9, 10 horizontal verlaufen, das heißt quer zu den Dachsparren 2 und in Längsrichtung der Dachsparren 2. Dadurch sind die beiden Schwenkachsen 11, 12, die parallel zu den Rändern der Befestigungseinrichtungen 9, 10 verlaufen, horizontal quer zu den Dachsparren 2 beziehungsweise in Längsrichtung der Dachsparren 2 ausgerichtet.

Es ist auch möglich, zuerst die Halte- und Justiervorrichtung 6 an der Unterseite der Dachsparren 2 zu befestigen und danach den Rotationslaser 5 an der Halte- und Justiervorrichtung 6 zu befestigen.

Es wird die Bezugsebene 4 festgelegt. Um die Rotationsebene 7 des Rotationslasers 5 parallel zur Bezugsebene 4 auszurichten, wird erfindungsgemäß durch Drehen an einer der beiden Flügelmuttern 15 die zweite Befestigungseinrichtung 10 so um die erste Schwenkachse 11 geschwenkt, dass die zweite Schwenkachse 12 parallel zur Bezugsebene 4 verläuft. Anschließend wird die zweite Befestigungseinrichtung 10 durch Drehen an der anderen Flügelmutter 15 so um die zweite Schwenkachse 12 geschwenkt, dass die erste Schwenkachse 11 parallel zur Bezugsebene 4 verläuft. Damit ist die Rotationsebene 7 des Laserstrahls des Rotationslasers 5 parallel zur Bezugsebene 4 ausgerichtet. Beim Schwenken um eine der beiden Schwenkachsen 11, 12, egal um welche, schwenkt aufgrund der Konstruktion der erfindungsgemäßen Halte- und Justiervorrichtung 6 die andere Schwenkachse 12, 11 nicht. Das bedeutet, dass eine parallel zu der Bezugsebene 4 ausgerichtete Schwenkachse 11, 12 bei einem Schwenken der zweiten Befestigungseinrichtung 10 um die andere Schwenkachse 12, 11 parallel zu der Bezugsebene 4 ausgerichtet bleibt. Es muss deswegen nicht iterativ zuerst um eine, dann um die andere und danach wieder um die eine Schwenkachse 11, 12 geschwenkt werden und so weiter, bis die Rotationsebene 7 parallel zur Bezugsebene 4 ausgerichtet ist, sondern die zweite Befestigungseinrichtung 10 mit dem Rotationslaser 5 wird nacheinander und jeweils nur einmal um die beiden Schwenkachsen 11, 12 geschwenkt, bis die jeweils andere Schwenkachse 12, 11 parallel zur Bezugsebene 4 verläuft. Die Reihenfolge ist egal, es kann zuerst um die erste Schwenkachse 11 oder zuerst um die zweite Schwenkachse 12 geschwenkt werden.

## Patentansprüche

1. Verfahren zu einem parallelen Ausrichten einer Rotationsebene (7) eines Laserstrahls eines Rotationslasers (5) parallel zu einer insbesondere nicht-horizontalen Bezugsebene (4), mit einer Halte- und Justiervorrichtung (6) für den Rotationslaser (5), die eine erste Befestigungseinrichtung (9) zum Befestigen der Halte- und Justiervorrichtung (6) an einem Befestigungsgrund und eine zweite Befestigungseinrichtung (10) zur Befestigung des Rotationslasers (5) an der Halte- und Justiervorrichtung (6) aufweist, wobei die beiden Befestigungseinrichtungen (9, 10) um zwei zu der Rotationsebene (7) des Rotationslasers (5) parallele, einander schneidende Schwenkachsen (11, 12) gegeneinander schwenkbar sind, wobei die erste Befestigungseinrichtung (9) der Halte- und Justiervorrichtung (6) an dem Befestigungsgrund befestigt und anschließend die Rotationsebene (7) des Rotationslasers (5) parallel zu der Bezugsebene (4) eingestellt wird, indem die zweite Befestigungseinrichtung (10) ausschließlich um eine erste der beiden Schwenkachsen (11) geschwenkt wird, bis eine zweite der beiden Schwenkachsen (12) parallel zur Bezugsebene (4) verläuft und danach die zweite Befestigungseinrichtung (10) ausschließlich um die zweite Schwenkachse (12) geschwenkt wird, bis die erste Schwenkachse (11) ebenfalls parallel zur Bezugsebene (4) des Rotationslasers (5) verläuft, **dadurch gekennzeichnet, dass** sich die beiden Schwenkachsen (11, 12) in einer Rotationsachse (8), um die der Laserstrahl des Rotationslasers (5) rotiert, schneiden.

2. Halte- und Justiervorrichtung mit einem Rotationslaser (5) zu einer Befestigung des Rotationslasers (5) an
einem Befestigungsgrund und zu einem parallelen Ausrichten einer Rotationsebene (7) eines Laserstrahls des Rotationslasers (5) parallel zu einer Bezugsebene (4) zur Durchführung des Verfahrens nach Anspruch 1, wobei die Halte- und Justiervorrichtung (6) eine erste Befestigungseinrichtung (9) zum Befestigen der Halte- und Justiervorrichtung (6) an einem Befestigungsgrund und eine zweite Befestigungseinrichtung (10) zur Befestigung des Rotationslasers (5) an der Halte- und Justiervorrichtung (6) aufweist, wobei die beiden Befestigungseinrichtungen (9, 10) um zwei zu der Rotationsebene (7) des Laserstrahls des Rotationslasers (5) parallele, einander schneidende Schwenkachsen (11, 12) gegeneinander schwenkbar sind, wobei die beiden Befestigungseinrichtungen (9, 10) elastisch insbesondere mit Elastomerpuffern (13) miteinander verbunden sind, **dadurch gekennzeichnet, dass** die zweite Befestigungseinrichtung (10) derart ausgebildet ist, dass der Rotationslaser (5) so an ihr befestigbar ist, dass die Rotationsachse (8) des Laserstrahls des Rotationslasers (5) den Schnittpunkt der beiden Schwenkachsen (11,12) schneidet.

3. Halte- und Justiervorrichtung nach Anspruch 2, **dadurch gekennzeichnet, dass** die beiden Befestigungseinrichtungen (9, 10) mit drei Elastomerpuffern (13) elastisch miteinander verbunden sind, die an Ecken eines gedachten, insbesondere rechtwinkligen Dreiecks angeordnet sind.

4. Halte- und Justiervorrichtung nach Anspruch 2 oder 3, **dadurch gekennzeichnet, dass** die Halte- und Justiervorrichtung (6) einen ersten Abstandseinsteller (16), der in einem radialen Abstand von der ersten Schwenkachse (11) angeordnet ist, und/oder einen zweiten Abstandseinsteller (17), der in einem radialen Abstand von der zweiten Schwenkachse (12) angeordnet ist, aufweist, und dass mit den Abstandseinstellern (16, 17) ein Abstand zwischen den beiden Befestigungseinrichtungen (9, 10) an den Stellen ein- und/oder verstellbar ist, an denen sich die Abstandseinsteller (16, 17) befinden, derart, dass die beiden Befestigungseinrichtungen (9, 10) gegeneinander um die erste Schwenkachse (11) und/oder um die zweite Schwenkachse (12) schwenkbar sind.

5. Halte- und Justiervorrichtung nach einem oder mehreren der Ansprüche 2 bis 4, **dadurch gekennzeichnet, dass** eine der beiden Befestigungseinrichtungen (9, 10) zu den Schwenkachsen (11, 12) parallele Ränder aufweist.

6. Halte- und Justiervorrichtung nach einem oder mehreren der Ansprüche 2 bis 5, **dadurch gekennzeichnet, dass** mindestens eine der beiden Befestigungseinrichtungen (9, 10) eine ebene Platte, insbesondere eine ebene L-förmige Platte aufweist, wobei die beiden Schwenkachsen (11, 12) senkrecht auf die Platte gesehen innerhalb von Schenkeln der L-förmigen Platte und/oder parallel zu Rändern der Schenkel der L-förmigen Platte verlaufen.

7. Halte- und Justiervorrichtung nach einem oder mehreren der Ansprüche 2 bis 6,
**dadurch gekennzeichnet, dass** die zweite Befestigungseinrichtung (10) einen Gewindezapfen (19) zur Befestigung des Rotationslasers (5) aufweist, dessen Achse den Schnittpunkt der beiden Schwenkachsen (11, 12) schneidet.

## Claims

1. A method for parallel alignment of a plane of rotation (7) of a laser beam of a rotating laser (5) parallel to a reference plane (4), in particular a non-horizontal reference plane, with a holding and adjusting apparatus (6) for the rotating laser (5), which has a first fastening device (9) for fastening the holding and adjusting apparatus (6) to a fastening base and a second fastening device (10) for fastening the rotating laser (5) to the holding and adjusting apparatus (6), wherein the two fastening devices (9, 10) can be pivoted relative to one another about two pivot axes (11, 12) parallel to the plane of rotation (7) of the rotating laser (5) and intersecting one another, wherein the first fastening device (9) of the holding and adjusting apparatus (6) is fastened to the fastening base and subsequently the plane of rotation (7) of the rotating laser (5) is set parallel to the reference plane (4) by pivoting the second fastening device (10) exclusively about a first of the two pivot axes (11) until a second of the two pivot axes (12) runs parallel to the reference plane (4) and thereafter the second fastening device (10) is pivoted exclusively about the second pivot axis (12) until the first pivot axis (11) also runs parallel to the reference plane (4) of the rotating laser (5), **characterized in that** the two pivot axes (11, 12) intersect in an axis of rotation (8) about which the laser beam of the rotating laser (5) rotates.

2. A holding and adjusting apparatus with a rotating laser (5) for fastening the rotating laser (5) to a fastening base and for parallel alignment of a plane of rotation (7) of a laser beam of the rotating laser (5) parallel to a reference plane (4) for performing the method according to claim 1, wherein the holding and adjusting apparatus (6) comprises a first fastening device (9) for fastening the holding and adjusting apparatus (6) to a fastening base and a second fastening device (10) for fastening the rotating laser (5) to the holding and adjusting apparatus (6), wherein the two fastening devices (9, 10) can be pivoted relative to one another about two pivot axes (11, 12) parallel to the plane of rotation (7) of the laser beam of the rotating laser (5) and intersecting one another, wherein the two fastening devices (9, 10) are elastically connected to one another, in particular by elastomer buffers (13), **characterized in that** the second fastening device (10) is designed in such a way that the rotating laser (5) can be fastened to it such that the axis of rotation (8) of the laser beam of the rotating laser (5) intersects the point of intersection of the two pivot axes (11, 12).

3. The holding and adjusting apparatus according to claim 2,
**characterized in that** the two fastening devices (9, 10) are elastically connected to one another by three elastomer buffers (13), which are arranged at the corners of an imaginary, in particular right-angled triangle.

4. The holding and adjusting apparatus according to claim 2 or 3,
**characterized in that** the holding and adjusting apparatus (6) has a first distance adjuster (16), which is arranged at a radial distance from the first pivot axis (11), and/or a second distance adjuster (17), which is arranged at a radial distance from the second pivot axis (12), **and in that** the distance adjusters (16, 17) can be used to set and/or adjust a distance between the two fastening devices (9, 10) at the points at which the distance adjusters (16, 17) are located, in such a way that the two fastening devices (9, 10) can be pivoted relative to one another about the first pivot axis (11) and/or about the second pivot axis (12).

5. The holding and adjusting apparatus according to one or more of claims 2 to 4, **characterized in that** one of the two fastening devices (9, 10) has edges parallel to the pivot axes (11, 12).

6. The holding and adjusting apparatus according to one or more of claims 2 to 5, **characterized in that** at least one of the two fastening devices (9, 10) has a flat plate, in particular a flat L-shaped plate, wherein the two pivot axes (11, 12) run perpendicularly to the plate as viewed within legs of the L-shaped plate and/or parallel to edges of the legs of the L-shaped plate.

7. The holding and adjusting apparatus according to one or more of claims 2 to 6, **characterized in that** the second fastening device (10) has a threaded pin (19) for fastening the rotating laser (5), the axis of which intersects the point of intersection of the two pivot axes (11, 12).

## Revendications

1. Procédé permettant un alignement parallèle d'un plan de rotation (7) d'un faisceau laser d'un laser rotatif (5) parallèlement à un plan de référence (4), en particulier non horizontal, comportant un dispositif de maintien et d'ajustement (6) pour le laser rotatif (5), lequel dispositif de maintien et d'ajustement présente un premier moyen de fixation (9) permettant de fixer le dispositif de maintien et d'ajustement (6) à un fond de fixation et un second moyen de fixation (10) permettant de fixer le laser rotatif (5) au dispositif de maintien et d'ajustement (6), dans lequel les deux moyens de fixation (9, 10) peuvent pivoter l'un contre l'autre autour de deux axes de pivotement (11, 12) parallèles au plan de rotation (7) du laser rotatif (5) et se coupant, dans lequel le premier moyen de fixation (9) du dispositif de maintien et d'ajustement (6) est fixé sur le fond de fixation et le plan de rotation (7) du laser rotatif (5) est ensuite réglé parallèlement au plan de référence (4) par pivotement du second moyen de fixation (10) exclusivement autour d'un premier des deux axes de pivotement (11), jusqu'à ce qu'un second des deux axes de pivotement (12) soit parallèle au plan de référence (4), puis par pivotement du second moyen de fixation (10) exclusivement autour du second axe de pivotement (12) jusqu'à ce que le premier axe de pivotement (11) soit également parallèle au plan de référence (4) du laser rotatif (5),
**caractérisé en ce que** les deux axes de pivotement (11, 12) se coupent dans un axe de rotation (8) autour duquel tourne le faisceau laser du laser rotatif (5).

2. Dispositif de maintien et d'ajustement comportant un laser rotatif (5) permettant une fixation du laser rotatif (5) à un fond de fixation et un alignement parallèle d'un plan de rotation (7) d'un rayon laser du laser rotatif (5) parallèlement à un plan de référence (4) pour la mise en oeuvre du procédé selon la revendication 1, dans lequel le dispositif de maintien et d'alignement (6) présente un premier moyen de fixation (9) permettant de fixer le dispositif de maintien et d'alignement (6) à un fond de fixation et un second moyen de fixation (10) permettant de fixer le laser rotatif (5) au dispositif de maintien et d'ajustement (6), dans lequel les deux moyens de fixation (9, 10) peuvent pivoter l'un contre l'autre autour de deux axes de pivotement (11, 12) parallèles au plan de rotation (7) du faisceau laser du laser rotatif (5) et se coupant l'un l'autre, dans lequel les deux moyens de fixation (9, 10) sont reliés l'un à l'autre de manière élastique, en particulier à l'aide de tampons en élastomère (13), **caractérisé en ce que** le second moyen de fixation (10) est conçu de telle sorte que le laser rotatif (5) peut y être fixé de manière à ce que l'axe de rotation (8) du rayon laser du laser rotatif (5) coupe le point d'intersection des deux axes de pivotement (11, 12).

3. Dispositif de maintien et d'ajustement selon la revendication 2, **caractérisé en ce que** les deux moyens de fixation (9, 10) sont reliés élastiquement entre eux par trois tampons en élastomère (13) qui sont disposés aux angles d'un triangle imaginaire, en particulier rectangulaire.

4. Dispositif de maintien et d'ajustement selon la revendication 2 ou 3, **caractérisé en ce que** le dispositif de maintien et d'ajustement (6) présente un premier élément de réglage de distance (16), qui est disposé à une distance radiale du premier axe de pivotement (11), et/ou un second élément de réglage de distance (17), qui est disposé à une distance radiale du second axe de pivotement (12), **et en ce que** les éléments de réglage de distance (16, 17) permettent de régler et/ou d'ajuster une distance entre les deux moyens de fixation (9, 10) aux endroits où se trouvent les éléments de réglage de distance (16, 17), de telle sorte que les deux moyens de fixation (9, 10) peuvent pivoter l'un contre l'autre autour du premier axe de pivotement (11) et/ou autour du second axe de pivotement (12).

5. Dispositif de maintien et d'ajustement selon l'une ou plusieurs des revendications 2 à 4, **caractérisé en ce que** l'un des deux moyens de fixation (9, 10) présente des bords parallèles aux axes de pivotement (11, 12).

6. Dispositif de maintien et d'ajustement selon l'une ou plusieurs des revendications 2 à 5, **caractérisé en ce qu'**au moins l'un des deux moyens de fixation (9, 10) présente une plaque plane, en particulier une plaque plane en forme de L, dans lequel les deux axes de pivotement (11, 12), vus perpendiculairement à la plaque, s'étendent à l'intérieur de branches de la plaque en forme de L et/ou parallèlement à des bords des branches de la plaque en forme de L.

7. Dispositif de maintien et d'ajustement selon l'une ou plusieurs des revendications 2 à 6, **caractérisé en ce que** le second moyen de fixation (10) présente un goujon fileté (19) pour la fixation du laser rotatif (5), l'axe dudit goujon fileté coupant le point d'intersection des deux axes de pivotement (11, 12).
